# EUROPEAN PATENT APPLICATION

(11) **EP 3 785 981 A1**
(43) Date of publication of application: **03.03.2021**
(21) Application number: 19791989.7
(22) Date of filing: 18.04.2019
(51) Int. Cl.: B60M 3/02, H02J 1/00

(54) **FEEDING DEVICE AND FEEDING SYSTEM**

(30) Priority: 24.04.2018 JP 2018083093
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: NOGI, Masayuki, Tokyo 105-0023 (JP)
(74) Representative: AWA Sweden AB
(86) International application number: PCT/JP2019/016678
(87) International publication number: WO 2019/208396

(57) **Abstract**

According to the present embodiment, a feeding device is a feeding device that supplies power to a DC feeding circuit to which a first feeding device is connected, and includes an information acquirer, a converter part, and a voltage controller. The information acquirer acquires information on a current output by the first feeding device to the DC feeding circuit. The converter part generates power to be supplied to the DC feeding circuit. The voltage controller executes first control that increases an output voltage of the converter part along with increase of the current based on the information on the current.

## Description

### Field

Embodiments of the present invention relate to a feeding device and a feeding system.

### Background

In general, in a feeding system of a DC electric railroad, a substation performs rectification to a DC current such as diode rectification, and thus regenerative power generated by an electric train is not supplied to an AC system. Therefore, in order to effectively use the regenerative power, it is necessary to efficiently supply the regenerative power to an electric train during power running. There is known a feeding system that, in a case of supplying regenerative power to an electric train during power running, changes the voltage of a feeding device installed in a substation to any voltage in accordance with the position or the state of a train.

However, in this feeding system, it is necessary to execute control in conjunction with a track circuit in a case where there are a plurality of electric trains between sensors that measure a feeding voltage or a feeding current. Therefore, an operation management system and a power supply device need to be controlled in conjunction with each other, which may result in complicated control. Further, when the voltage of a feeding device is reduced to be lower than the voltage of a substation, a cross current, which is a current output from the substation and flows into the feeding device, may be generated, and there is a risk of loss of power.

### Citation List

### Patent Literature

Patent Literature 1: Japanese Patent No. 6080787

### Summary

### Technical Problem

An object of the present invention is to provide a feeding device and a feeding system that can efficiently supply power to an electric train during power running.

### Solution to Problem

A feeding device according to an embodiment is a feeding device that supplies power to a DC feeding circuit to which a first feeding device is connected, and comprises an information acquirer, a converter part, and a voltage controller. The information acquirer acquires information on a current output by the first feeding device to the DC feeding circuit. The converter part generates power to be supplied to the DC feeding circuit. The voltage controller executes first control that increases an output voltage of the converter part along with increase of the current based on the information on the current.

### Brief Description of Drawings

[FIG. 1] FIG. 1 is a block diagram illustrating a configuration of a feeding system.
[FIG. 2] FIGS. 2 are characteristic diagrams illustrating an example of a relation between an output current of a first feeding device and an output voltage of a second feeding device.
[FIG. 3] FIG. 3 is a diagram exemplifying a configuration of a converter part.
[FIG. 4] FIG. 4 is a diagram exemplifying a configuration of a converter part using a three-phase transformer.
[FIG. 5] FIG. 5 is a diagram exemplifying a configuration of a voltage controller.
[FIG. 6] FIG. 6 is a diagram exemplifying a configuration of a voltage controller in a case of using the converter (FIG. 4).
[FIG. 7] FIG. 7 is a diagram illustrating an example in which substations are arranged on both sides of a feeding device.
[FIG. 8] FIGS. 8 are characteristic diagrams illustrating an example of a relation between an output voltage of the first feeding device and an output voltage of the second feeding device.
[FIG. 9] FIG. 9 is a diagram exemplifying a configuration of a voltage controller in which second control can be executed.
[FIG. 10] FIG. 10 is a diagram exemplifying a configuration of a voltage controller in which second control can be executed in a case of using the converter (FIG. 4).
[FIG. 11] FIG. 11 is a diagram illustrating an example in which a feeding device is arranged at an end of a rail.
[FIG. 12] FIG. 12 is a diagram illustrating an example in which substations are arranged on both sides of a feeding device.

### Description of Embodiments

A feeding device and a feeding system according to embodiments of the present invention will now be explained in detail with reference to the accompanying drawings. The embodiments described below are only examples of the embodiments of the present invention and it is not to be understood that the present invention is limited to these embodiments. In the drawings referred to in the embodiments, same parts or parts having identical functions are denoted by like or similar reference characters and there is a case where redundant explanations thereof are omitted. Further, for convenience of explanation, there are cases where dimensional ratios of the parts in the drawings are different from those of actual products and some part of configurations is omitted from the drawings.

### (First embodiment)

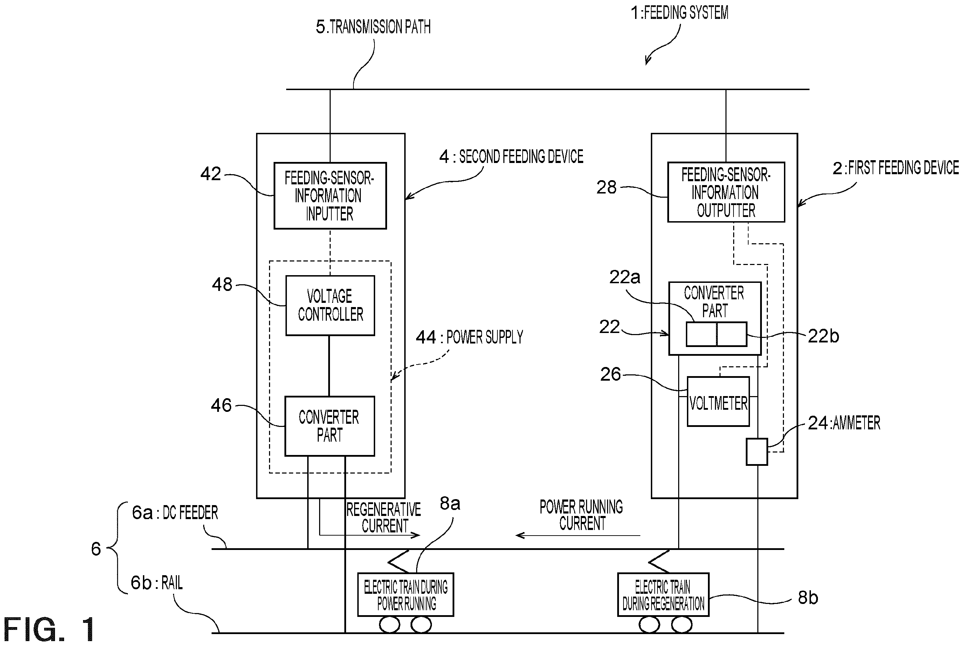

FIG. 1 is a block diagram illustrating a configuration of a feeding system 1. As illustrated in FIG. 1, the feeding system 1 according to the present embodiment is an example of a system that feeds DC power to an electric train or the like through a DC feeding circuit. The feeding system 1 is configured by a first feeding device 2 and a second feeding device 4 connected to each other via a DC feeding circuit 6.

The first feeding device 2 is a substation, for example, is installed every 10 km, for example, or in every station of a railroad, a monorail, or the like, and supplies DC power to an electric train through the DC feeding circuit 6. The second feeding device 4 is arranged every 5 km, for example, in a distributed manner and performs, for example, charging and discharging through the DC feeding circuit 6. A detailed configuration example of each of the first feeding device 2 and the second feeding device 4 is described later. In the present embodiment, a power supply device that supplies power to the DC feeding circuit 6 is called a feeding device, and the form of the power supply device is not limited to the first feeding device 2 or the second feeding device 4 according to the present embodiment.

The DC feeding circuit 6 is a DC power-supply system including a DC feeder 6a and a rail 6b. The DC feeder 6a may be called an overhead wire or a power line, and the rail 6b may be called a return wire, for example.

Electric trains 8a and 8b are vehicles in a transportation system such a railroad or a monorail, and are electric trains, for example. The electric trains 8a and 8b perform power regeneration by a regenerative brake in braking. The power regenerated and supplied to the DC feeding circuit 6 is called regenerative power. For example, the electric train 8a exemplifies an electric train during power running that receives supply of power via the DC feeding circuit 6. The electric train 8b exemplifies an electric train during regeneration that is supplying regenerative power generated by the regenerative brake to the DC feeding circuit 6. In this manner, the regenerative power generated in the electric train 8b is supplied to the electric train 8a during power running through the DC feeding circuit 6.

Meanwhile, the regenerative power not having supplied to the electric train 8a during power running is wastefully consumed in a regenerating vehicle because of so-called regeneration invalidation. Therefore, in order to effectively use the regenerative power generated by the regenerating vehicle, it is necessary to control a feeding voltage of the first feeding device 2 that is a voltage of a connection point between the first feeding device 2 and the DC feeder 6a and a feeding voltage of the second feeding device 4 that is a voltage of a connection point between the second feeding device 4 and the DC feeder 6a to be appropriate values.

A detailed configuration of the first feeding device 2 is described here. The first feeding device 2 includes a converter part 22, an ammeter 24, a voltmeter 26, and a feeding-sensor-information outputter 28, for example.

The converter part 22 transforms AC power supplied from an AC power-supply system that is a commercial power supply, converts the AC power to DC power, and supplies the DC power to the DC feeding circuit 6. For example, the converter part 22 includes a transformer 22a and a rectifier 22b. The transformer 22a transforms the voltage of the AC power-supply system to a voltage for the DC feeding circuit 6. The rectifier 22b is a diode rectifier or a PWM converter, for example, and is an AC-DC converter that converts AC to DC. That is, the rectifier 22b converts power of the AC power-supply system transformed by the transformer 22a to DC power and supplies the DC power to the DC feeding circuit 6. The rectifier 22b may be configured to be disconnectable. In this case, the rectifier 22b is disconnected in a case where no power is supplied to the DC feeding circuit 6.

The ammeter 24 measures an output current of the first feeding device 2. More specifically, the ammeter 24 measures a current supplied from the converter part 22 to the DC feeding circuit 6 and outputs the measurement result to the feeding-sensor-information outputter 28. The ammeter 24 may further include a filter that adjusts time responses. Accordingly, the ammeter 24 can output a current signal including information on the output current with a delayed time response to the feeding-sensor-information outputter 28. By delaying the time response of the output signal of the ammeter 24 in this manner, it is possible to match the control response of the second feeding device 4 with a timing of current output from the first feeding device 2.

The voltmeter 26 measures a feeding voltage in the first feeding device 2, that is, a voltage of the DC feeding circuit 6 and outputs the measurement result to the feeding-sensor-information outputter 28. In this manner, the voltmeter 26 acquires information on a voltage at a predetermined position in the DC feeding circuit 6 the operation characteristics of which are changed by the first feeding device 2. This voltage is changed by regenerative power of the electric train 8b. The voltmeter 26 may further include a filter that adjusts time responses. Accordingly, the voltmeter 26 can output a voltage signal containing information on an output voltage with a delayed time response to the feeding-sensor-information outputter 28. By delaying the time response of the output signal of the voltmeter 26 in this manner, it is possible to match the control response of the second feeding device 4 with a timing of change of a voltage of the first feeding device 2.

The feeding-sensor-information outputter 28 outputs information related to at least one of a current output from the first feeding device 2 to the DC feeding circuit 6 and a voltage of the DC feeding circuit 6, to the second feeding device 4. For example, the feeding-sensor-information outputter 28 outputs the current signal input from the ammeter 24 and the voltage signal input from the voltmeter 26 to the second feeding device 4.

A detailed configuration of the second feeding device 4 is described here. The second feeding device 4 includes a feeding-sensor-information inputter 42 and a power supply 44.

The feeding-sensor-information inputter 42 acquires information related to at least one of the current output from the first feeding device 2 to the DC feeding circuit 6 and the voltage of the DC feeding circuit 6. More specifically, the feeding-sensor-information inputter 42 receives the current signal and the voltage signal transmitted from the feeding-sensor-information outputter 28, and supplies current information included in the current signal and voltage information included in the voltage signal to the power supply 44. The feeding-sensor-information inputter 42 according to the present embodiment corresponds to an information acquirer.

The power supply 44 supplies power to the DC feeding circuit 6 based on the information supplied from the feeding-sensor-information inputter 42. That is, the power supply 44 includes a converter part 46 and a voltage controller 48.

The converter part 46 generates power to be supplied to the DC feeding circuit 6. The converter part 46 is configured by, for example, a buck-boost chopper circuit (buck-boost Converter) that gate-drives switching elements, and the converter part 46 converts a voltage between the DC feeding circuit 6 and an electricity storage element. A detailed configuration of the converter part 46 will be described later.

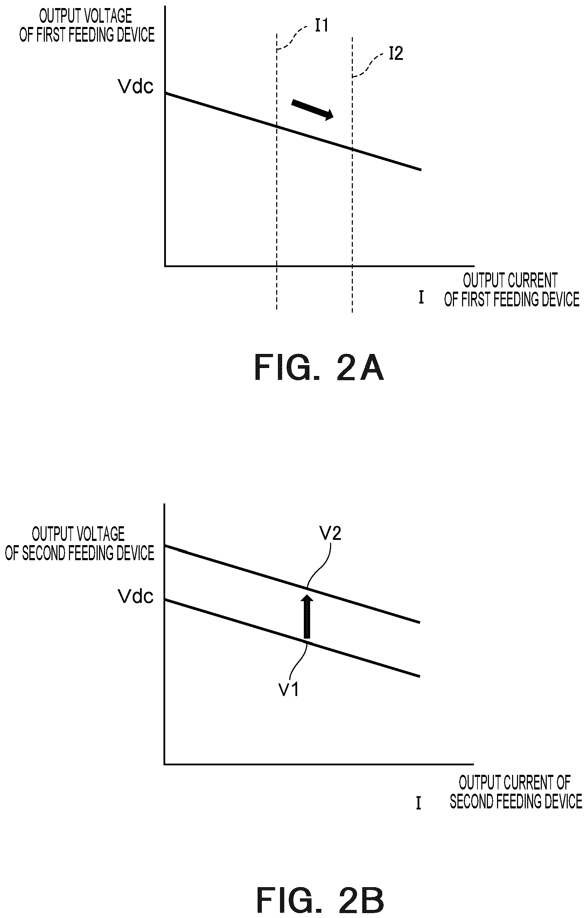

FIGS. 2 are characteristic diagrams illustrating an example of a relation between current-voltage characteristics of the first feeding device 2 and an output voltage of the second feeding device 4. FIG. 2A is a diagram illustrating an example of current-voltage characteristics of the first feeding device 2. The vertical axis represents an output voltage of the first feeding device 2 and the horizontal axis represents an output current of the first feeding device 2. FIG. 2B is a characteristic diagram illustrating an example of a relation between an output current of the first feeding device 2 and an output voltage of the second feeding device 4. The vertical axis represents the output voltage of the second feeding device 4 and the horizontal axis represents the output current of the first feeding device 2.

As illustrated in FIGS. 2, the voltage controller 48 is configured to include a CPU (Central Processing Unit) and executes PWM control, for example. More specifically, the voltage controller 48 executes first control that increases an output voltage of the converter part 46 along with increase of a current supplied from the first feeding device 2 to the DC feeding circuit 6, based on information input from the feeding-sensor-information inputter 42.

For example, when the output current of the first feeding device 2 increases from I1 to 12, the voltage controller 48 increases the output voltage of the second feeding device 4 from V1 to V2. In this manner, the voltage controller 48 increases the output voltage of the second feeding device 4 along with increase of the current supplied from the first feeding device 2 to the DC feeding circuit 6, thereby increasing power supply for power-running of the electric train 8a. Accordingly, power supply from the second feeding device 4 to the electric train 8a during power running is increased, which can increase a pantograph-point voltage of the electric train 8a and improve acceleration performance of the electric train 8a. Further, by increasing the output voltage of the converter part 46, it is also possible to prevent supply of the output current of the first feeding device 2 to the second feeding device 4, that is, a so-called cross current. A detailed configuration of the voltage controller 48 will be described later. As illustrated in FIG. 2A, the output current and the output voltage of the first feeding device 2 have a predetermined relation therebetween. Therefore, it is possible that the voltage controller 48 estimates the output current of the first feeding device 2 from the output voltage of the first feeding device 2.

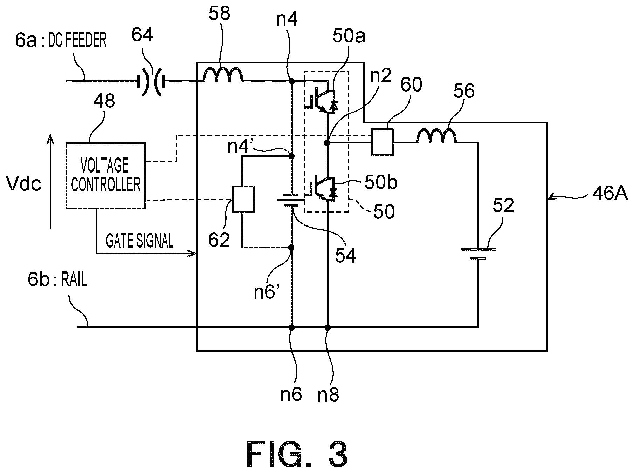

Here, an example of a detailed configuration of a converter part 46A is described with reference to FIG. 3. FIG. 3 is a diagram exemplifying a configuration of the converter part 46A. As illustrated in FIG. 3, the converter part 46A is configured to include a converter 50, an electricity storage element 52, a capacitor 54, reactors 56 and 58, a current detector 60, and a voltage detector 62. FIG. 3 further illustrates a contactor 64.

The converter 50 is a PWM converter and performs switching of switching devices 50a and 50b based on a gate signal from the voltage controller 48 to output a DC voltage Vdc. More specifically, each of the switching devices 50a and 50b includes a transistor that has a self-extinguishing ability and performs switching and a (freewheeling) diode connected in anti-parallel to the transistor. These switching devices 50a and 50b are connected in series to each other via a node n2. The switching devices 50a and 50b are connected in parallel to the capacitor 54 via nodes n4 and n6. Further, the switching device 50, and the reactor 56 and the electricity storage element 52 that are connected in series to each other are connected in parallel to each other between the node n2 and a node n8.

The node n4 is connected to the DC feeder 6a via the reactor 58 and the contactor 64, and the node n6 is connected to the rail 6b. The current detector 60 is connected between the node n2 and the reactor 56, and the voltage detector 62 is connected in parallel to the capacitor 54 via nodes n4' and n6'. The electricity storage element 52 is an energy storage element capable of being charged and discharged.

The voltage controller 48 outputs a gate signal that controls a voltage between the nodes n4 and n6 to the converter 50 based on a current value and a voltage value detected by the current detector 60 and the voltage detector 62 in addition to information acquired by the feeding-sensor-information inputter 42. The voltage controller 48 executes PWM control for the switching devices 50a and 50b in this manner, thereby executing control that converts the voltage of the electricity storage element 52 to the DC voltage Vdc between the nodes n4 and n6, that is, to the DC voltage Vdc to be supplied to the DC feeding circuit 6.

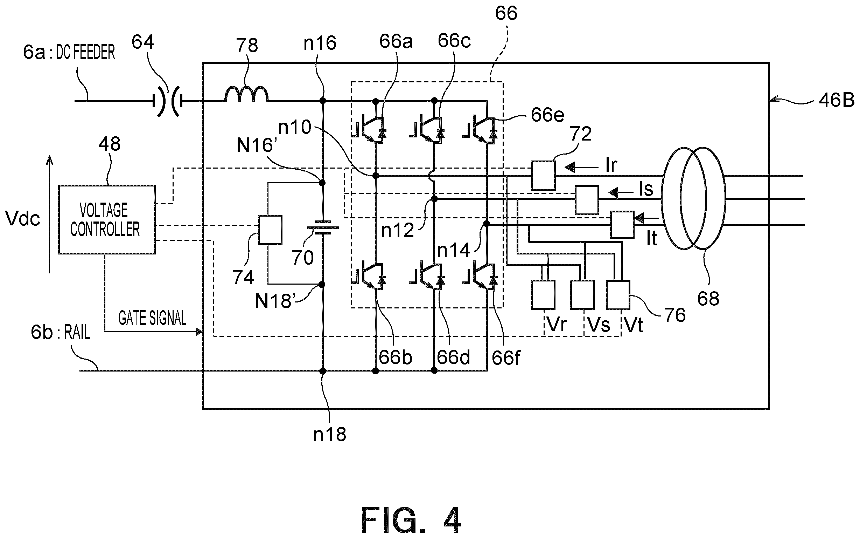

FIG. 4 is a diagram exemplifying a configuration of a converter part 46B using a three-phase transformer. As illustrated in FIG. 4, the converter part 46B is configured to include a converter 66, a three-phase transformer 68, a capacitor 70, a plurality of current detectors 72, a voltage detector 74, a plurality of voltage detectors 76, and a reactor 78. FIG. 4 further illustrates the contactor 64.

The converter 66 is a PWM converter and performs switching of switching devices 66a to 66f based on a gate signal from the voltage controller 48 to output the DC voltage Vdc. More specifically, in the converter 66, the switching device 66a and a switching device 66b are connected to each other in series via a node n10, switching devices 66c and 66d are connected to each other in series via a node n12, and the switching devices 66a and 66b are connected to each other in series via a node n14. The switching devices 66a and 66b are identical to the switching devices 50 in configuration. The switching devices 66a and 66b, the switching devices 66c and 66d, and the switching devices 66e and 66f are connected in parallel to the capacitor 70 via nodes n16 and n18.

The transformer 68 is a three-phase power supply that outputs a three-phase voltage having phases R, S, and T. Three-phase AC power is supplied to the transformer 68 from a power station, for example.

The current detectors 72 are connected between the nodes n10, n12, and n14 and the three-phase transformer 68, respectively. The current detectors 72 measure line currents Ir, Is, and It, respectively.

The voltage detector 74 is connected in parallel to the capacitor 70 via nodes n16' and n18'. The voltage detectors 76 are connected between the nodes n10, n12, and n14 and measure voltages Vr, Vs, and Vt, respectively. The node n16 is connected to the DC feeder 6a via the reactor 72 and the contactor 64, and the node n18 is connected to the rail 6b.

The voltage controller 48 executes PWM control for the switching devices 66a to 66f based on current values and voltage values detected by the current detectors 72 and the voltage detectors 74 and 76 in addition to information acquired by the feeding-sensor-information inputter 42, thereby controlling the DC voltage Vdc between the nodes n4 and n6, that is, the DC voltage Vdc to be supplied to the DC feeding circuit 6.

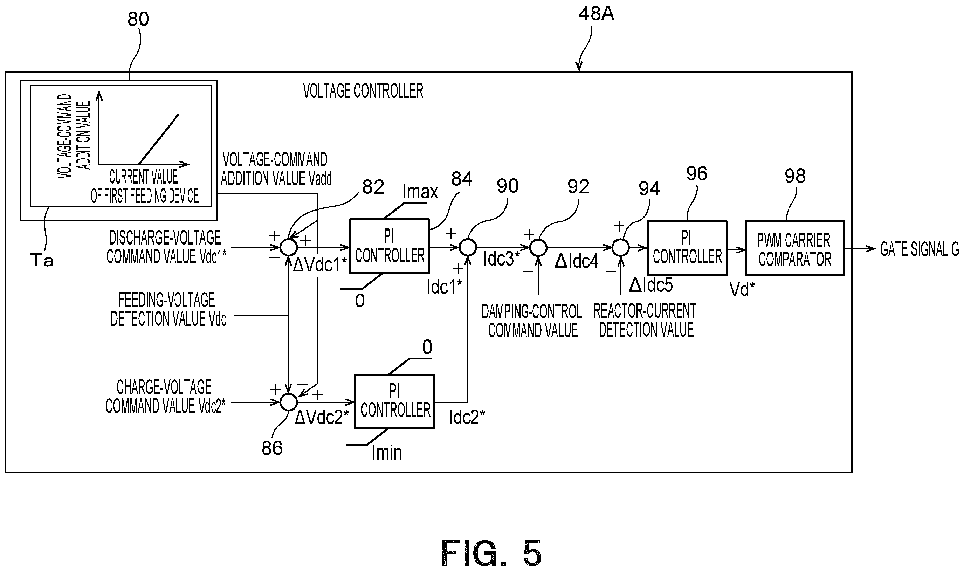

An example of a detailed configuration of a voltage controller 48A in a case of using the converter 50 (FIG. 3) is described here with reference to FIG. 5. FIG. 5 is a diagram exemplifying a configuration of the voltage controller 48A. As illustrated in FIG. 5, the voltage controller 48A is configured to include a storage part 80, calculators 82, 86, 90, 92, and 94, PI controllers 84, 88, and 96, and a PWM carrier comparator 98.

The storage part 80 stores therein a table Ta that represents a relation between a voltage-command addition value Vadd and an output current I of the first feeding device 2. FIG. 5 schematically illustrates a relation between the voltage-command addition value Vadd and the output current I of the first feeding device 2 described in the table Ta. The horizontal axis represents the output current I of the first feeding device 2 and the vertical axis represents a voltage-command addition value add. The voltage-command addition value Vadd increases along with increase of the output current I of the first feeding device 2.

The calculator 82 adds a discharge-voltage command value Vdc1* and the voltage-command addition value Vadd to each other and calculates a difference ΔVdc1* between the result of addition and the feeding voltage Vdc in the DC feeding circuit 6 detected by the voltage detector 62 (FIG. 3). The PI controller 84 executes PI control using the difference value ΔVdc1* calculated by the calculator 82 to generate a current command value Idc1*. The PI controller 84 is a PI controller on a discharging side, and the lower limit of an output limiter is limited to 0. The discharge-voltage command value Vdcl is, for example, a command value in a case where the electric train 8a or 8b (FIG. 1) is powering, and may be called a power-running-operation command value.

The calculator 86 adds a charge-voltage command value Vdc2* and the voltage-command addition value Vadd to each other and calculates a difference ΔVdc2* between the result of addition and the feeding voltage Vdc in the DC feeding circuit 6 detected by the voltage detector 62 (FIG. 3). The PI controller 88 executes PI control using the difference value ΔVdc2* calculated by the calculator 82 to generate a current command value Idc2*. The PI controller 88 is a PI controller on a charging side, and the upper limit of an output limiter is limited to 0. The charge-voltage command value Vdc2 is a command value in a case where the electric train 8b (FIG. 1) generates regenerative power, and may be called a regeneration command value.

The calculator 90 calculates a value Idc3* obtained by adding the current command value Idc1* of the PI controller 84 and the current command value Idc2* of the PI controller 88 to each other. The calculator 92 calculates a difference value ΔIdc4 between the addition value Idc3* of the calculator 90 and a damping-control command value. In practice, a discharge command and a charge command are not issued at the same time. Therefore, ΔIdc4 is a difference value between the current command value Idc1* and a damping command value or a difference value between the current command value Idc2* and the damping command value. The damping-control command value is, for example, a value that compensates for the voltage of a PWM converter.

The calculator 94 calculates a difference ΔIdc5 between the difference value ΔIdc4 calculated by the calculator 92 and a reactor-current detection value. The reactor-current detection value is, for example, a phase compensation value for a PWM converter. The PI controller 96 executes PI control using the difference value ΔIdc5 calculated by the calculator 94 to generate a voltage command value Vd*.

The PWM carrier comparator 98 compares levels of a so-called modulated wave and a so-called carrier, thereby converting the voltage command value Vd* to a gate signal G for the converter 50 (FIG. 3). As is understood from the above descriptions, the voltage controller 48A outputs the gate signal G for increasing the output voltage Vdc of the converter part 46 along with increase of an output current of the first feeding device 2.

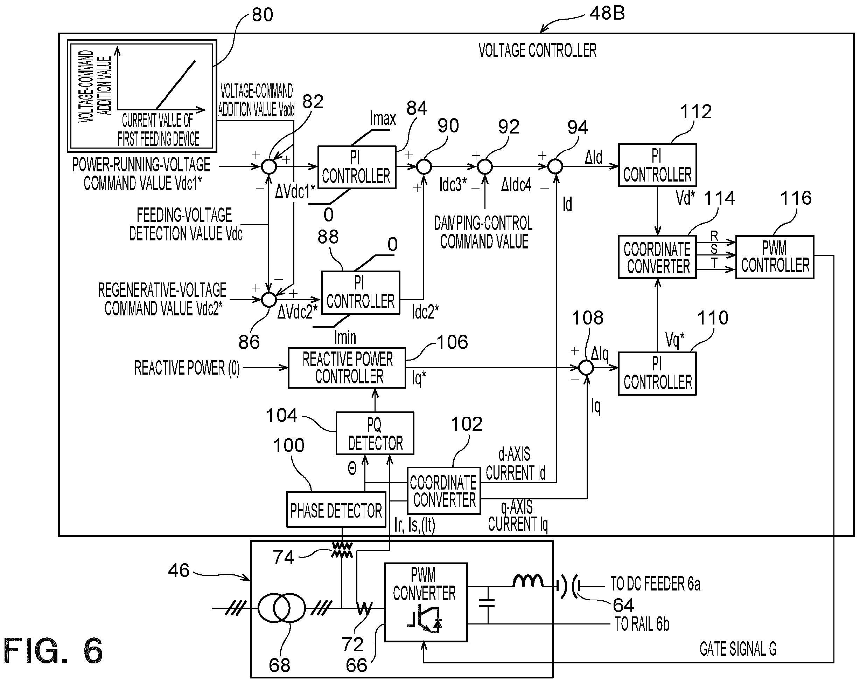

FIG. 6 is a diagram exemplifying a configuration of a voltage controller 48B in a case of using the converter 66 (FIG. 4). Constituent elements equivalent to those described in FIGS. 4 and 5 are denoted with like reference numerals and descriptions thereof are omitted.

Here, representation using a d-axis and a q-axis, which are employed in a rotatory coordinate system that rotates with a power-supply frequency of (ω/2π) of the transformer 68, is introduced. The q-axis is advanced with respect to the d-axis by 90 degrees. As illustrated in FIG. 6, the voltage controller 48B is configured to include the storage part 80, the calculators 82, 86, 90, 92, 94 and a calculator 108, the PI controllers 84 and 88 and PI controllers 110 and 112, a phase detector 100, a PQ detector 104, a reactive power controller 106, coordinate converters 112 and 114, and a PWM carrier controller 116.

The phase detector 100 detects a power-supply phase θ based on a zero-cross signal cprs of an R-S interphase voltage. The coordinate converter 102 performs three-phase to two-phase conversion to convert the line currents Ir, Is, and It to a d-axis current Id in the dq-axis coordinate system and a q-axis current Iq that is a q-axis component based on the power-supply phase θ. The PQ detector 104 detects an instantaneous actual current and an instantaneous imaginary current based on the power-supply phase θ and the line currents Ir, Is, and It. The reactive power controller 106 outputs a command value Iq* for q-axis current controlling a reactive current based on the instantaneous actual current and the instantaneous imaginary current detected by the PQ detector 104.

The calculator 108 calculates a difference value ΔIq between the command value Iq* for q-axis current and the q-axis current Iq. The PI controller 110 executes PI control using the difference value ΔIq calculated by the calculator 108 to obtain a voltage command value Vq*.

Meanwhile, the calculator 94 calculates a difference value ΔId between the difference value ΔIdc4 calculated by the calculator 92 and the d-axis current Id. The PI controller 112 executes PI control using the difference value ΔId calculated by the calculator 94 to generate a voltage command value Vd*. The coordinate converter 114 performs two-phase to three-phase conversion for the voltage command values Vq* and Vd* to generate three-phase voltage command values Vr, Vd, and Vt. The PWM converter 116 generates the gate signal G based on the three-phase voltage command values Vr, Vd, and Vt. In this manner, the voltage controller 48 outputs the gate signal G for increasing the output voltage Vdc of the converter part 46 along with increase of an output current of the first feeding device 2.

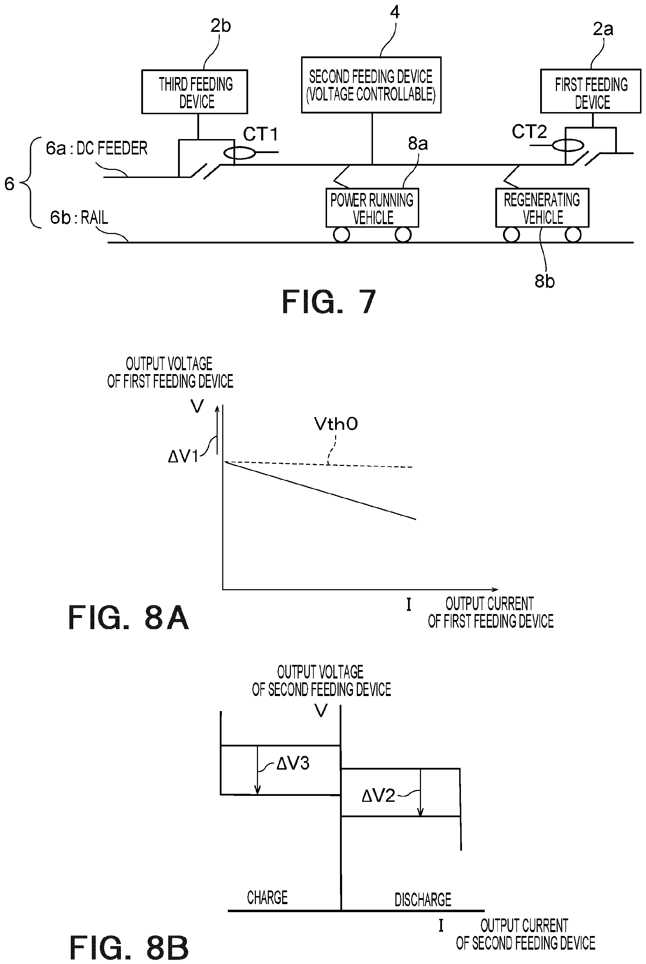

FIG. 7 is a diagram illustrating an example in which a first feeding device 2a and a third feeding device 2b are arranged on both sides of the second feeding device 4. That is, the first feeding device 2a and the third feeding device 2b are arranged to be adjacent to a connection point at which the converter part 46 is connected to the DC feeding circuit 6. In a case where the adjacent first and third feeding devices 2a and 2b are located on both sides of the second feeding device 4 as illustrated in FIG. 7, a value such as a total value or an average value of output currents of the adjacent first and third feeding devices 2a and 2b is used as a current value of a substation used for voltage control. Alternatively, either one of the output currents of the adjacent first and third feeding devices 2a and 2b may be used.

As described above, according to the present embodiment, the voltage controller 48, 48A, or 48B executes the first control that increases an output voltage of the converter part 46 of the second feeding device 4 as the first feeding device 2 increases a current output to the DC feeding circuit 6. Accordingly, power supply from the second feeding device 4 to the electric train 8a during power running is increased, and it is possible to increase a pantograph-point voltage of the electric train 8 and improve the acceleration performance of the electric train 8a. Further, the output voltage of the converter part 46 of the second feeding device 4 is increased along with increase of the current output by the first feeding device 2. Therefore, it is possible to prevent a cross current flowing from the first feeding device 2 to the second feeding device 4.

### (Second embodiment)

The present embodiment is different from the first embodiment in that, whereas the second feeding device 4 according to the first embodiment executes the first control that increases the output voltage Vdc along with increase of a current output by the first feeding device 2, the second feeding device 4 according to the present embodiment can also execute second control that reduces the output voltage Vdc along with increase of a voltage of the DC feeding circuit 6 in the first feeding device 2. In the following descriptions, differences between the second feeding device 4 according to the present embodiment and the second feeding device 4 according to the first embodiment are described.

FIGS. 8 are characteristic diagrams illustrating an example of a relation between current-voltage characteristics of the first feeding device 2 and an output voltage of the second feeding device 4. FIG. 8A is a diagram illustrating an example of current-voltage characteristics of the first feeding device 2. The vertical axis represents an output voltage of the first feeding device 2 and the horizontal axis represents an output current of the first feeding device 2. FIG. 8B is a characteristic diagram illustrating an example of a relation between the output voltage of the first feeding device 2 and the output voltage of the second feeding device 4. The vertical axis represents the output voltage of the second feeding device 4 and the horizontal axis represents the output current of the first feeding device 2.

As illustrated in FIGS. 8, the converter part 46 (FIG. 1) can perform an operation for power-running operation that discharges power to the DC feeding circuit 6 and an operation for regeneration that charges power from the DC feeding circuit 6, and the voltage controller 48 (FIG. 1) reduces an operating voltage of the converter part 46 during regeneration in a case where a voltage supplied to the DC feeding circuit 6 by the first feeding device 2 increases. More specifically, the voltage controller 48 (FIG. 1) executes the first control that reduces an operating-point voltage of the converter part 46 along with increase of the voltage supplied by the first feeding device 2 to the DC feeding circuit 6, based on information on a voltage of the first feeding device 2 input from the feeding-sensor-information inputter 42. For example, when the voltage of the first feeding device 2 increases by ΔV1, a discharge voltage of the second feeding device 4 is reduced by ΔV2 or a charge voltage of the second feeding device 4 is reduced by ΔV3. In this manner, the voltage controller 48 reduces the output voltage of the second feeding device 4, that is, a transmission voltage along with increase of the current supplied by the first feeding device 2 to the DC feeding circuit 6, thereby increasing power supply from the electric train 8b to the electric train 8a. In this case, the output current of the first feeding device 2 is 0 and thus a so-called cross current is not generated.

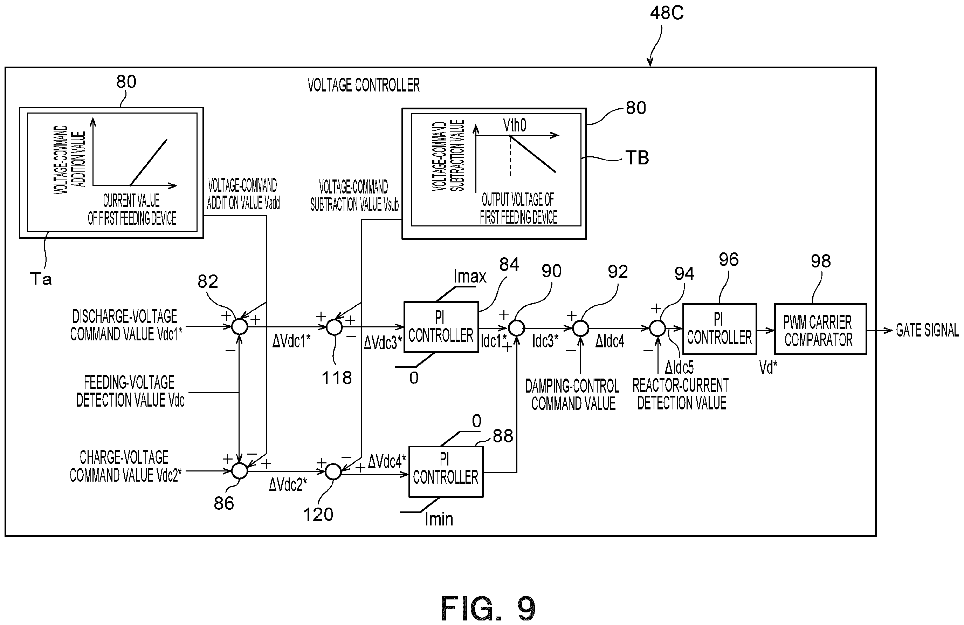

FIG. 9 is a diagram exemplifying a configuration of a voltage controller 48C in a case of using the converter 50 (FIG. 3). As illustrated in FIG. 9, the voltage controller 48C is different from the voltage controller 48A according to the first embodiment in that the storage part 80 further includes the table Tb in which a relation between a voltage value V of the first feeding device 2 and a voltage-command subtraction value Vsub is recorded. That is, the voltage controller 48C is configured to include the storage part 80, the calculators 82, 86, 90, 92, and 94 and calculators 118 and 120, the PI controllers 84, 88, and 96, and the PWM carrier comparator 98. FIG. 9 schematically illustrates a relation between the voltage-command subtraction value Vsub and the feeding voltage V in the first feeding device 2 described in the table Tb. The horizontal axis represents the feeding voltage V in the first feeding device 2 and the vertical axis represents the voltage-command subtraction value Vsub. As is understood from FIG. 9, the voltage-command subtraction value Vsub decreases along with increase of the feeding voltage V in the first feeding device 2. The voltage-command subtraction value Vsub is a value that is equal to or less than 0. Here, a first threshold Vth0 is a value that is equivalent to the first threshold Vth0 in FIG. 8A. That is, the voltage-command subtraction value Vsub is a negative value when an output current in the first feeding device 2 is 0. As described above, the table Tb is configured to prevent a cross current from the first feeding device 2 from flowing even when the output voltage Vdc of the feeding device 4 is reduced.

The calculator 118 calculates an addition value Vdc3* obtained by adding the voltage-command subtraction value Vsub to the difference value ΔVdc1* calculated by the calculator 82. The PI controller 84 executes PI control using the addition value Vdc3* calculated by the calculator 118 to generate the current command value Idc1*.

The calculator 120 calculates an addition value Vdc4* obtained by adding the voltage-command subtraction value Vsub to the difference value ΔVdc2* calculated by the calculator 86. The PI controller 88 executes PI control using the addition value Vdc4* calculated by the calculator 120 to generate the current command value Idc2*. Other processes are identical to those described with reference to FIG. 5, and thus descriptions thereof are omitted.

As is understood from the above descriptions, in the second control using the table Tb, the gate signal G is output, which decreases the output voltage Vdc of the converter part 46 along with increase of the feeding voltage V in the first feeding device 2. By setting the characteristics in which a regeneration start voltage of the second feeding device 4 is made lower than a transmission voltage of the converter part 22 of the first feeding device 2 in the table Tb in this manner, it is possible to supply more regenerative power of the electric train 8b to the electric train 8a. In this case, the supply current in the first feeding device 2 is 0 and thus no cross current is generated. Further, by making the regeneration start voltage of the second feeding device 4 lower than the transmission voltage of the converter part 22 of the first feeding device 2, it is possible to perform charging by regenerative power of the electric train 8b more efficiently. Also, it is possible to prevent regeneration invalidation.

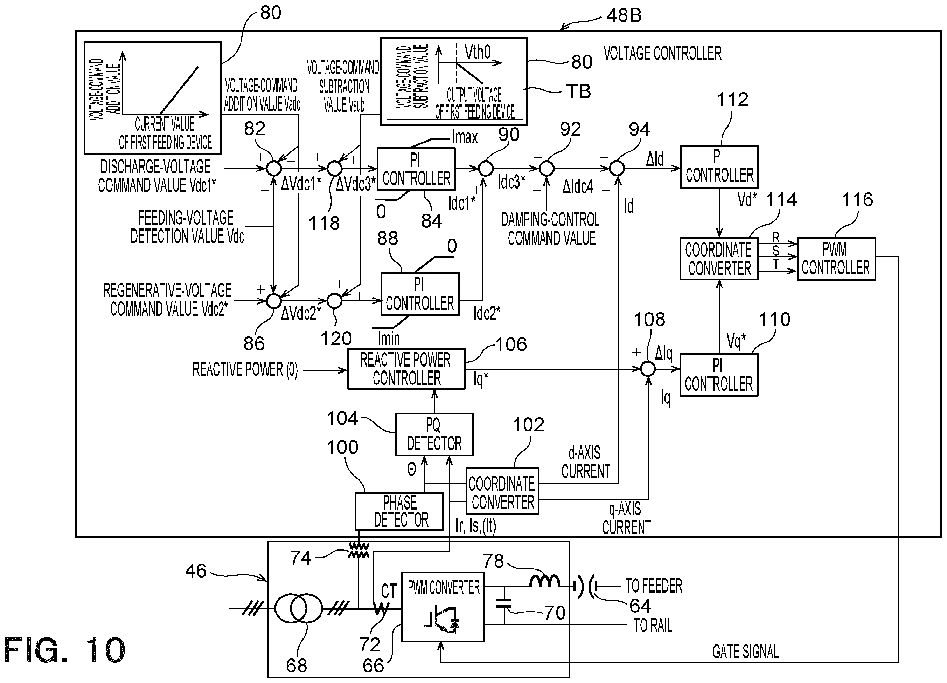

FIG. 10 is a diagram exemplifying a configuration of a voltage controller 48D in a case of using the converter 66 (FIG. 4). As illustrated in FIG. 10, the voltage controller 48D is different from the voltage controller 48B according to the first embodiment in that the storage part 8 further includes the table Tb in which a relation between the voltage value V of the first feeding device 2 and the voltage-command subtraction value Vsub is recorded. That is, the voltage controller 48D is configured to include the storage part 80, the calculators 82, 86, 90, 92, 94, 108, 118, and 120, the PI controllers 84, 88, 110, and 112, the phase detector 100, the PQ detector 104, the reactive power controller 106, the coordinate converters 112 and 114, and the PWM carrier controller 116. FIG. 10 schematically illustrates a relation between the voltage-command subtraction value Vsub and the feeding voltage V in the first feeding device 2 described in the table Tb. The horizontal axis represents the feeding voltage V in the first feeding device 2 and the vertical axis represents the voltage-command subtraction value Vsub. As is understood from FIG. 10, the voltage-command subtraction value Vsub decreases along with increase of the feeding voltage V in the first feeding device 2 of the first feeding device 2. The voltage-command subtraction value Vsub is a value that is equal to or less than 0.

The calculator 118 calculates the addition value Vdc3* obtained by adding the voltage-command subtraction value Vsub to the difference value ΔVdc1* calculated by the calculator 82. The PI controller 84 executes PI control using the addition value Vdc3* calculated by the calculator 118 to generate the current command value Idc1*.

The calculator 120 calculates the addition value Vdc4* obtained by adding the voltage-command subtraction value Vsub to the difference value ΔVdc2* calculated by the calculator 86. The PI controller 88 executes PI control using the addition value Vdc4* calculated by the calculator 120 to generate the current command value Idc2*. Other processes are identical to those described with reference to FIG. 6, and thus descriptions thereof are omitted.

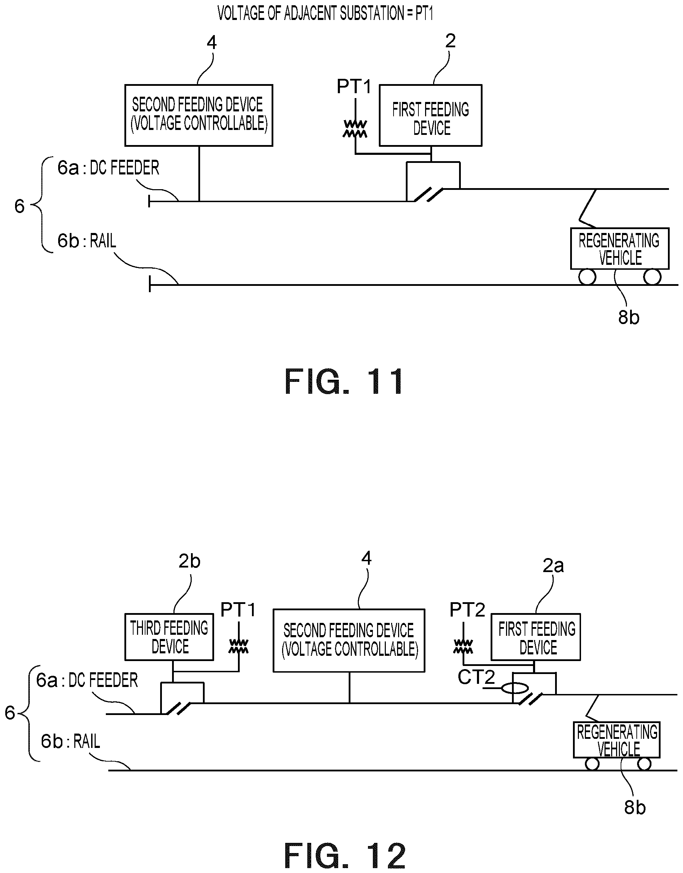

FIG. 11 is a diagram illustrating an example in which the second feeding device 4 is arranged at an end of the rail 6b. An adjacent substation is the first feeding device 2 only as illustrated in FIG. 10. Therefore, a voltage PT1 of the first feeding device 2 is used for control by the voltage controller 48C or 48D.

FIG. 12 is a diagram illustrating an example in which the first feeding device 2a and the third feeding device 2b are arranged on both sides of the second feeding device 4. In a case where the adjacent first and third feeding devices 2a and 2b are located on both sides of the second feeding device 4 as illustrated in FIG. 12, the voltage controller 48C or 48D uses a lower one of the voltage PT1 and a voltage PT2 of the first and third feeding devices 2a and 2b for control. Accordingly, it is possible to prevent a cross current flowing from the adjacent first feeding device 2a or the adjacent third feeding device 2b to the second feeding device 4. In a case where the second feeding device 4 is a device that performs heat treatment for surplus energy, such as a regenerative resistor, a cross current can be prevented and energy usage efficiency is improved.

Meanwhile, in a case of using a higher one of the voltages PT1 and PT2 of the first and third feeding devices 2a and 2b for control, it is possible to prevent regeneration invalidation in a regenerating vehicle. Therefore, in a case of pursuing energy saving performance even if a cross current flows, the higher one of the voltages PT1 and PT2 may be used for control. In a case where the second feeding device 4 is a type that can perform charging that uses a cross current or can supply the cross current to a facility or the like, it is possible to effectively use the cross current flowing into the second feeding device 4.

There is a case where the second feeding device 4 is arranged to be close to one of the first feeding device 2a and the third feeding device 2b. In this case, the DC feeding circuit 6 causes almost no resistance, and thus there is a risk that a cross current from a substation that is a closer one of the first feeding device 2a and the third feeding device 2b flows to the second feeding device 4 when a discharge start voltage or a charge start voltage of the second feeding device 4 is made lower. Therefore, it is possible to configure that control based on the table Tb in the second feeding device 4 is stopped when the rectifier 22b of the closer substation is applied, and the control based on the table Tb is made active when the rectifier 22b is released.

As described above, according to the present embodiment, the voltage controller 48A or 48B executes the second control that reduces an output voltage of the converter part 46 of the second feeding device 4 along with increase of the voltage of the DC feeding circuit 6. Accordingly, it is possible to achieve more efficient supply of regenerative power from the electric train 8b during regeneration to the electric train 8a during power running. Further, the output voltage of the converter part 46 of the second feeding device 4 is reduced when it is equal to or higher than the first threshold Vth0, and thus the output current of the first feeding device 2a or 2b becomes 0, and it is possible to prevent a cross current from flowing into the second feeding device 4.

While certain embodiments have been described, these embodiments have been presented by way of example only, and are not intended to limit the scope of the inventions. Indeed, the novel embodiments described herein may be embodied in a variety of other forms and various omissions, substitutions, and changes may be made without departing from the spirit of the inventions. The embodiments and their modifications are intended to be included in the scope and the spirit of the invention and also in the scope of the invention and their equivalents described in the claims.

## Claims

1. A feeding device supplying power to a DC feeding circuit to which a first feeding device is connected, the feeding device comprising:
an information acquirer configured to acquire information on a current output by the first feeding device to the DC feeding circuit;
a converter part configured to generate power to be supplied to the DC feeding circuit; and
a voltage controller configured to execute first control that increases an output voltage of the converter part along with increase of the current based on the information on the current.

2. A feeding device supplying power to a DC feeding circuit to which a first feeding device is connected, the feeding device comprising:
an information acquirer configured to acquire information on a voltage at a predetermined position in the DC feeding circuit;
a converter part configured to generate power to be supplied to the DC feeding circuit; and
a voltage controller configured to execute second control that reduces an output voltage of the converter part along with increase of the voltage based on the information on the voltage.

3. The device of Claim 1, wherein the information acquirer also acquires information on a voltage at a predetermined position in the DC feeding circuit, and
the voltage controller estimates a current output by the first feeding device based on the information on the voltage.

4. The device of Claim 1 or 3, wherein the first feeding device is arranged to be adjacent to a connection point at which the converter part is connected to the DC feeding circuit, and
in a case where there are two adjacent feeding devices, the voltage controller executes the first control based on any of an output current of one of the feeding devices, a total value of output currents of the respective feeding devices, and an average value of the output currents of the respective feeding devices.

5. The device of any one of Claims 1, 3, and 4, wherein the voltage controller executes the first control of the output voltage based on a signal obtained by delaying a time response of an output signal of an ammeter having measured the current.

6. The device of Claim 2, wherein the converter part is capable of performing an operation for power running to discharge power to the DC power circuit and an operation for regeneration to charge power from the DC feeding device, and
the voltage controller reduces an operating voltage of the converter part during regeneration in a case where the voltage increases.

7. The device of Claim 2 or 6, wherein the first feeding device performs an operation of stopping supply of a current in a case where the voltage exceeds a first threshold, and
the voltage controller reduces an operating voltage in the converter part in a case where the voltage exceeds the first threshold in the second control.

8. The device of any one of Claims 2, 6, and 7, wherein the voltage controller executes the second control based on a signal obtained by delaying a time response of an output signal of a voltmeter having measured the voltage.

9. The device of any one of Claims 2, 6, 7, and 8, wherein the first feeding device supplies power to the DC feeding circuit by a silicon rectifier that is disconnectable, and
the voltage controller executes the second control that makes the output voltage of the converter part lower than a transmission voltage of the converter part along with increase of the voltage, in a case where the silicon rectifier of the first feeding device is disconnected from the DC feeding circuit.

10. The device of Claim 2, wherein the voltage acquired by the information acquirer is a feeding device at a connection point to which the first feeding device supplies the power.

11. The device of any one of Claims 1 to 10, wherein the converter part includes at least one of a feeding device capable of charging power to and discharging power from the DC feeding circuit and a PWM converter.

12. A feeding system comprising:
the feeding device according to any one of Claims 1 to 10; and
the first feeding device configured to supply power to a DC feeding circuit to which the feeding device is connected.

13. A feeding system comprising a first feeding device configured to supply power to a DC feeding circuit and a second feeding device configured to supply power to the DC feeding circuit, wherein the second feeding device includes
an information acquirer configured to acquire information on a current output by the first feeding device to the DC feeding circuit,
a converter part configured to generate power to be supplied to the DC feeding circuit, and
a voltage controller configured to execute first control that increases an output voltage of the converter part along with increase of the current based on the information on the current.

14. A feeding system comprising a first feeding device configured to supply power to a DC feeding circuit and a second feeding device configured to supply power to the DC feeding circuit, wherein the second feeding device includes
an information acquirer configured to acquire information on a voltage at a predetermined position in the DC feeding circuit,
a converter part configured to generate power to be supplied to the DC feeding circuit, and
a voltage controller configured to execute second control that reduces an output voltage of the converter part along with increase of the voltage based on the information on the voltage.
